# EUROPÄISCHE PATENTANMELDUNG

(11) **EP 4 197 346 A1**
(43) Veröffentlichungstag der Anmeldung: **21.06.2023**
(21) Anmeldenummer: 21214479.4
(22) Anmeldetag: 14.12.2021
(51) Int. Cl.: A23L 11/00, A23J 3/14, A23L 25/00, A23L 29/20, A23L 29/212, A23L 33/115, A23L 33/185, A23L 33/00, A23L 29/10

(54) **VERFAHREN ZUR HERSTELLUNG EINES VEGANEN NAHRUNGSMITTELS**

(71) Anmelder: Herbert Ospelt Anstalt, 9487 Bendern (LI)
(72) Erfinder: Ospelt, Philipp, 9487 Bendern (LI)
(74) Vertreter: Kaminski Harmann

(57) **Zusammenfassung**

Die Erfindung betrifft ein Verfahren zur Herstellung eines veganen Nahrungsmittels, wobei eine vegane Matrix 1 durch Vermischen von Pflanzenöl, Stärke, Verdickungsmittel, Wasser, Pflanzenprotein, Pflanzenmehl, Salz und Emulgator hergestellt wird, die vegane Matrix 1 in einen Einfülltrichter 2 einer Vakuumfüllmaschine 3 eingefüllt wird, die vegane Matrix 1 in der Vakuumfüllmaschine 3 verdichtet wird, die vegane Matrix 1 als erstes veganes Nahrungsmittelerzeugnis zu einem Füllstromteiler 4 unter einem Druck, der von einer Drehschieberpumpe in der Vakuumfüllmaschine 3 bereitgestellt wird, befördert wird, das erste vegane Nahrungsmittelerzeugnis 1 in mindestens zwei Stränge eines zweiten veganen Nahrungsmittelerzeugnisses 5 im Füllstromteiler 4 aufgeteilt wird, und die Stränge aus dem Füllstromteiler als dritte vegane Nahrungsmittelerzeugnisse ausgeschieden werden, wobei die Stränge jeweils ein rundes Profil aufweisen.

## Beschreibung

### GEBIET DER ERFINDUNG

Die vorliegende Erfindung betrifft ein Verfahren zur Herstellung eines veganen Nahrungsmittels, insbesondere eines veganen Snacks.

Immer mehr Menschen wollen teilweise oder komplett auf Fleisch oder Produkte tierischen Ursprungs verzichten, jedoch nicht auf deren charakteristischen Geschmack. Folglich steigt die Nachfrage nach veganen Fleisch- und Wurstersatzprodukten immer weiter an. Neben dem Geschmack spielen Textur und Optik für den Konsumenten ebenfalls eine grosse Rolle, welche dem entsprechenden fleischhaltigen Produkt so nahe wie möglich kommen sollen.

Gerade im Bereich der veganen Snacks "für Zwischendurch" nimmt die Anzahl an Produkten stetig zu, wobei viele dieser Produkte einem Wurstsnack wie dem klassischen Landjäger in Geschmack und Optik nachempfunden sind. Als Basis/Proteinquelle wird dabei häufig auf Soja/Sojaprotein oder auf Getreide/Getreideprotein (zum Beispiel Gluten) zurückgegriffen. Eine Schwierigkeit liegt jedoch darin, den veganen Snack in grosser Menge herzustellen.

Nach dem Stand der Technik werden solche veganen Snacks überwiegend manuell hergestellt, was jedoch folgende Nachteile mit sich bringt: zum einen werden so nicht alle Snacks gleich (zum Beispiel unterschiedliche Längen und Dicken), zum anderen dauert die Produktion von grossen Mengen deutlich länger als bei einer maschinellen/industriellen Fertigung. Auf eine maschinelle Produktion wird häufig verzichtet, da der vegane Snack in seiner Ausgangsform eine Textur aufweisen muss, welche eine Verarbeitung in industriellen Anlagen ermöglicht. Das Bereitstellen der für eine Produktionsanlage geeigneten Textur und Konsistenz stellt dabei eine zentrale Hausforderung des Stands der Technik dar.

Es ist daher die Aufgabe der vorliegenden Erfindung ein Verfahren zur Herstellung eines veganen Nahrungsmittels bereitzustellen, welches diese Schwierigkeiten des Stands der Technik vermeidet.

Diese Aufgabe wird durch die vorliegende Erfindung gelöst, welche ein Verfahren zur Herstellung einer veganen Matrix auf Hülsenfruchtbasis bereitstellt, welche maschinell/industriell verarbeitbar ist, wobei die Verarbeitung zumindest teilweise mittels eines Füllstromteilers erfolgt und sowohl die vegane Matrix als auch der Füllstromteiler so abgestimmt werden, dass eine solche Verarbeitung möglich ist.

### ZUSAMMENFASSUNG DER ERFINDUNG

Die Erfindung betrifft ein Verfahren zur Herstellung eines veganen Nahrungsmittels, welches die folgenden Schritte aufweist:

Herstellen einer veganen Matrix durch Vermischen von Pflanzenöl, Stärke, Verdickungsmittel, Wasser, Pflanzenprotein, Pflanzenmehl, Salz und Emulgator,

Einfüllen der veganen Matrix in einen Einfülltrichter einer Vakuumfüllmaschine,

Verdichten der veganen Matrix in der Vakuumfüllmaschine,

Befördern der veganen Matrix als erstes veganes Nahrungsmittelerzeugnis zu einem Füllstromteiler unter einem Druck, der von einer Drehschieberpumpe in der Vakuumfüllmaschine bereitgestellt wird,

Aufteilen des ersten veganen Nahrungsmittelerzeugnisses in mindestens zwei Stränge eines zweiten veganen Nahrungsmittelerzeugnisses im Füllstromteiler,

Ausscheiden der Stränge aus dem Füllstromteiler als dritte vegane Nahrungsmittelerzeugnisse, wobei die Stränge jeweils ein rundes Profil aufweisen.

In einer Ausführungsform kann das Verfahren die Schritte aufweisen:

Ablegen der dritten veganen Nahrungsmittelerzeugnisse auf einem Gitterblech, wobei das Gitterblech mit einem Pflanzenöl überzogen ist,

Herstellen vierter veganer Nahrungsmittelerzeugnisse durch Portionieren der dritten veganen Nahrungsmittelerzeugnisse mit einem Schneidwerkzeug auf eine Länge, die zwischen 50 und 110% der Länge des Gitterblechs entspricht,

Einlagern des die vierten veganen Nahrungsmittelerzeugnisse tragenden Gitterblechs in eine Kochkammer,

Bereitstellen einer ersten Temperatur und einer ersten Feuchtigkeit in der Kochkammer.

Weiterhin kann das Verfahren die Schritte aufweisen: Einlagern des die vierten veganen Nahrungsmittelerzeugnisse tragenden Gitterblechs in eine Kühlkammer und Bereitstellen einer zweiten Temperatur und einer zweiten Feuchtigkeit in der Kühlkammer.

In einer Ausführungsform kann das Verfahren die Schritte aufweisen:

Einlagern des die vierten veganen Nahrungsmittelerzeugnisse tragenden Gitterblechs in eine Reifekammer,

Bereitstellen einer dritten Temperatur und einer dritten Feuchtigkeit in der Reifekammer,

Reifen der vierten veganen Nahrungsmittelerzeugnisse zu fünften veganen Nahrungsmittelerzeugnissen über eine Reifedauer hinweg, die in einem definierten zeitlichen Bereich liegt, wobei dieser zeitliche Bereich so definiert ist, dass der aw-Wert der fünften veganen Nahrungsmittelerzeugnisse am Ende der Reifedauer maximal 0,92 beträgt, wobei bei einem aw-Wert kleiner oder gleich / maximal 0,92 die fünften veganen Nahrungsmittelerzeugnisse bei Raumtemperatur einen definierten zeitlichen Bereich haltbar sind.

Insbesondere kann das Reifen in der Reifekammer derart erfolgen, dass der aw-Wert der fünften veganen Nahrungsmittelerzeugnisse am Ende der Reifedauer im Bereich von 0,82-0,9 liegt.

Weiterhin kann das Verfahren den Schritt aufweisen: Herstellen sechster veganer Nahrungsmittelerzeugnisse durch Portionieren der fünften veganen Nahrungsmittelerzeugnisse mit einem Schneidwerkzeug auf eine Länge zwischen 8 cm und 20 cm, insbesondere 13 cm und 15 cm.

Weiterhin kann das Verfahren den Schritt aufweisen: Herstellen der veganen Matrix durch Vermischen einer ersten veganen Teilmatrix, einer zweiten veganen Teilmatrix und einer dritten veganen Teilmatrix.

Insbesondere kann das Vermischen der ersten, zweiten und dritten veganen Teilmatrix mittels eines Kutters erfolgen und die vegane Matrix kann die Konsistenz eines Bräts aufweisen.

In einer Ausführungsform kann das Verfahren den Schritt aufweisen: Herstellen der ersten veganen Teilmatrix durch Vermischen, insbesondere mittels eines Kutters, von: Pflanzenöl, Stärke, Verdickungsmittel und Wasser, insbesondere wobei das Wasser zumindest teilweise in Form von Eis vorliegt.

Weiterhin kann das Verfahren den Schritt aufweisen: Herstellen der zweiten veganen Teilmatrix durch Vermischen von: Pflanzenprotein, Pflanzenmehl, Stärke, Salz und Wasser.

Insbesondere kann das Salz der Mischung der zweiten veganen Teilmatrix ein Phosphatsalz sein.

Weiterhin kann das Verfahren den Schritt aufweisen: Herstellen der dritten veganen Teilmatrix durch Vermischen von: Wasser, insbesondere wobei das Wasser zumindest teilweise in Form von Eis vorliegt, Pflanzenprotein, Stärke, Verdickungsmittel, Salz, Pflanzenöl und Emulgator.

Insbesondere kann das Herstellen der dritten veganen Teilmatrix durch Vermischen mittels eines Kutters erfolgen und die dritte vegane Teilmatrix kann als Emulsion hergestellt sein.

Weiterhin kann das Verfahren den Schritt aufweisen: gewichtsbezogenes Vergleichmässigen des ersten veganen Nahrungsmittelerzeugnisses im Füllstromteiler.

Das Vergleichmässigen kann basierend auf einer Verwendung einer Paddel-Mischwelle und/oder einer Spiral-Mischwelle und/oder zumindest einer integrierten Wiegezelle erfolgen.

In einer Ausführungsform kann das Verfahren den Schritt aufweisen: Bereitstellen eines Räuchergases in der Reifekammer zumindest während eines Teils der Reifedauer.

### KURZE BESCHREIBUNG DER ZEICHNUNGEN

Weitere Vorteile der vorliegenden Erfindung sind aus der detaillierten Beschreibung und den Zeichnungen ersichtlich.
Figur 1 zeigt eine Ausführungsform des erfindungsgemässen Verfahrens und die dafür eigesetzten Geräte;
Figur 2 zeigt dritte und vierte vegane Nahrungsmittelerzeugnisse als Zwischenprodukte einer Ausführungsform des erfindungsgemässen Verfahrens;
Figur 3 zeigt vierte und fünfte vegane Nahrungsmittelerzeugnisse als Zwischenprodukte einer Ausführungsform des erfindungsgemässen Verfahrens;
Figur 4 zeigt fünfte und sechste vegane Nahrungsmittelerzeugnisse als Zwischen- bzw. Endprodukt einer Ausführungsform des erfindungsgemässen Verfahrens.

### DETAILLIERTE BESCHREIBUNG DER ZEICHNUNGEN

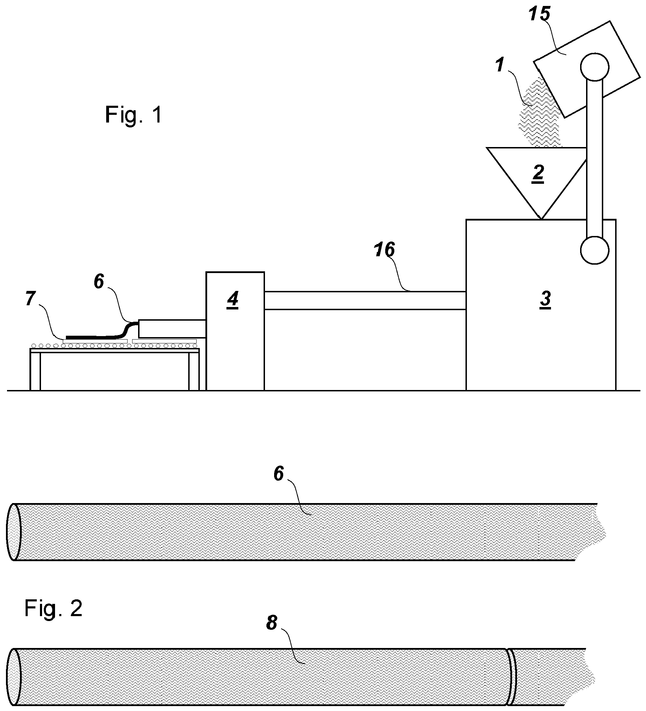

**Figur 1** zeigt eine Ausführungsform des erfindungsgemässen Verfahrens und die dafür eigesetzten Geräte. Die vegane Matrix 1 entsteht durch das Vermischen folgender Bestandteile: Pflanzenöl, Stärke, Verdickungsmittel, Wasser, Pflanzenprotein, Pflanzenmehl, Salz und Emulgator. Die jeweiligen Bestandteile werden dabei insbesondere nicht direkt zur veganen Matrix 1 vermischt, sondern es werden vorzugsweise aus den entsprechenden Bestandteilen zunächst eine erste, eine zweite und eine dritte vegane Teilmatrix (jeweils nicht dargestellt) hergestellt, wobei diese anschliessend zu der veganen Matrix 1 vermischt werden.

Das Vermischen kann dabei mittels eines Kutters (hier nicht gezeigt) erfolgen. Für die Herstellung der ersten veganen Teilmatrix werden Pflanzenöl, Stärke, Verdickungsmittel, Wasser und Eis im Kutter zu einer homogenen/cremigen Masse vermischt. Als Pflanzenöl kommen hierfür beispielsweise Sonnenblumen- oder Rapsöl in Frage. Mögliche Stärken sind Kartoffel-, Mais- oder Gertreidestärke und mögliche Verdickungsmittel sind Methylcellulose, Citrusfasern oder Euchema-Algen. Das Eis dient dazu, dass sich die Masse beim vermischen/kuttern nicht zu stark erwärmt (maximale Temperatur: +2 °C).

Für die Herstellung der zweiten veganen Teilmatrix werden Pflanzenprotein, Pflanzenmehl, Stärke, Salz und Wasser vermischt und mindestens 40 Minuten gequollen. Das Pflanzenprotein und das Pflanzenmehl sind beispielsweise erbsenbasiert (es handelt sich um ein Protein, welches aus der Erbse isoliert wurde, auch als Erbsenprotein bezeichnet und um ein Mehl, welches durch das Mahlen von getrockneten Erbsen gewonnen wird) und verleihen dem veganen Nahrungsmittel den gewünschten Proteinanteil und die gewünschte Festigkeit. Das Salz kann ein Phosphatsalz sein, welches die Oberflächenspannung des Wassers reduziert und so die Wasserbindung des Pflanzenproteins vergrössert sowie die Verarbeitung/Handhabung der zweiten veganen Teilmatrix erleichtert.

Für die Herstellung der dritten veganen Teilmatrix werden Wasser, insbesondere wobei das Wasser zumindest teilweise in Form von Eis vorliegt, Pflanzenprotein, Stärke, Verdickungsmittel, Salz, Pflanzenöl und Emulgator in einem Kutter vermischt/gekuttert. Das Vermischen erfolgt insbesondere so, dass eine Emulsion bereitgestellt wird. Auch bei diesem Schritt dient das Eis zur Kühlung der Masse beim vermischen/kuttern (maximale Temperatur: +7 °C). Der Emulgator, welcher beispielhaft auf Mono- oder Diglyceriden basiert, dient dazu, dass sich die Emulsion nach dem Mischvorgang nicht wieder entmischt.

Die erste, zweite und dritte vegane Teilmatrix werden in einem Kutter zur veganen Matrix 1 so gemischt, dass eine homogene Brätmasse vorliegt.

Über einen Behälter 15 wird eine Menge der veganen Matrix 1 in den Einfülltrichter 2 der Vakuumfüllmaschine 3 eingefüllt, in der Vakuumfüllmaschine 3 durch eine Drehschieberpumpe (nicht dargestellt) verdichtet und in eine Rohrleitung 16 befördert, über welche es als erstes veganes Nahrungsmittelerzeugnis an einen Füllstromteiler 4 gelangt.

Der Füllstromteiler 4 teilt das erste vegane Nahrungsmittelerzeugnis auf in mindestens zwei, insbesondere fünf bis zehn, im Speziellen acht Teilstränge, im Folgenden zweite vegane Nahrungsmittelerzeugnisse 5 genannt. Im Inneren des Füllstromteilers 4 werden die Teilstränge vergleichmässigt, wobei dies insbesondere auf einer Gewichtsdetektion und/oder auf einer Volumendetektion erfolgen kann. Hierzu können sogenannte Paddel- und/oder Spiral-Mischwellen, bzw. Wiegezellen eingesetzt werden.

Die zweiten veganen Nahrungsmittelerzeugnisse 5 werden durch eine Matrize mit rundem Profil aus dem Füllstromteiler 4 als dritte vegane Nahrungsmittelerzeugnisse 6 auf einem Gitterblech 7 abgelegt, welches z.B. auf einem Rollband mit der Ausflussgeschwindigkeit der dritten veganen Nahrungsmittelerzeugnisse 6 Schritthalten kann. Das Gitterblech 7 wird vor dem Belegen eingefettet bzw. geölt, dies etwa mit einem Sprühnebel aus Pflanzenöl, was als Antihaftmittel fungiert.

Die dritten veganen Nahrungsmittelerzeugnisse 6 werden beim Austritt aus dem Füllstromteiler nicht in eine Umhüllung (z.B. Kunstdarm) gegeben. Das Gitterblech 7 weist insbesondere eine spezielle Maschung des Gitters auf, welche dafür sorgt, dass möglichst wenig Auflagefläche besteht und dennoch die Form der noch weichen dritten veganen Nahrungsmittelerzeugnisse 6 erhalten bleibt.

**Figur 2** zeigt, dass die dritten veganen Nahrungsmittelerzeugnisse 6 auf Länge geschnitten werden, d.h. quer zur Ausflussrichtung. Insbesondere kann dies durch ein entsprechend langes Schneidemittel für alle Stränge gleichzeitig erfolgen, womit auch sichergestellt wird, dass alle Stränge die gleiche Länge haben. Die nun auf Länge geschnittenen, zylinderförmigen Stränge werden im Folgenden vierte vegane Nahrungsmittelerzeugnisse 8 genannt.

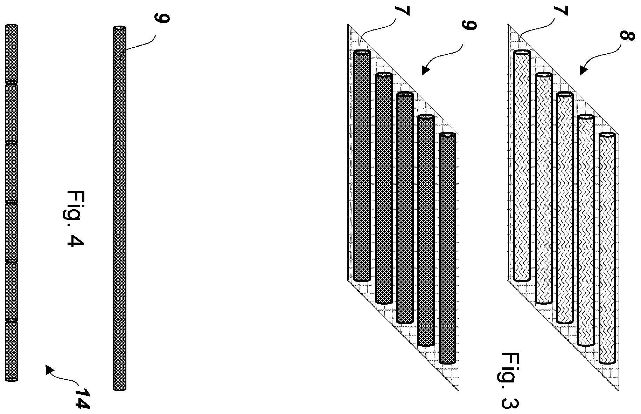

Das Verhältnis aus Blechgrösse und Schnittlänge ist so gewählt, dass das Gitterblech 7 gut ausgenutzt wird, aber dennoch ein Sicherheitsabstand zum Rand des Gitterblechs 7, siehe **Figur 3** besteht. Das derartig beladene Gitterblech 7 wird nun in eine Kochkammer gegeben, in welcher die vierten veganen Nahrungsmittelerzeugnisse 8 gegart werden. Durch den Garschritt/Erhitzungsschritt koagulieren die enthaltenen Pflanzenproteine, wodurch die vierten veganen Nahrungsmittelerzeugnisse 8 stabilisiert werden und nach der Verformung/nach dem Ausfluss aus dem Füllstromteiler 4 ihre Form behalten. Weiterhin wird durch die Koagulation der Proteine die gewünschte Textur des veganen Nahrungsmittels erreicht. Nach dem Garschritt wird das mit den vierten veganen Nahrungsmittelerzeugnissen 8 beladene Gitterblech 7 in eine Kühlkammer gegeben, um die vierten veganen Nahrungsmittelerzeugnisse 8 für die weiteren Verarbeitungsschritte abzukühlen (zu erreichende Kühltemperatur: 3 °C). Durch das Abkühlen wird die Koagulation der Proteine gefestigt, was für einen langfristigen Erhalt der Textur des veganen Nahrungsmittels sorgt.

Das beladene Gitterblech 7 wird nach dem Abkühlen in eine Reifekammer gegeben, in welcher die vierten veganen Nahrungsmittelerzeugnisse 8 getrocknet bzw. gereift werden können. Bei speziell eingestellter Temperatur und Luftfeuchtigkeit, bzw. Temperatur- und/oder Luftfeuchtigkeits-Verläufen, reifen die vierten veganen Nahrungsmittelerzeugnisse 8 zu fünften veganen Nahrungsmittelerzeugnissen 9. Die fünften veganen Nahrungsmittelerzeugnisse 9 haben auf dem Blech 7 auch einen speziell definierten Querabstand voneinander, der bevorzugt für den Reifeprozess berücksichtigt wird.

Der Reifeprozess dauert in etwa bis zu fünf Tagen, insbesondere ein bis eineinhalb Tage. Die Reifedauer wird insbesondere so gewählt, dass der aw-Wert der fünften veganen Nahrungsmittelerzeugnisse 9 am Ende der Reifedauer maximal 0,92 beträgt, insbesondere im Bereich von 0,82-0,9 liegt. Durch einen vorliegenden aw-Wert kleiner oder gleich 0,92 kann das vegane Nahrungsmittel bei Raumtemperatur (15-25 °C), also ohne weitere Kühlung, haltbar gemacht werden. Der aw-Wert ist das Mass an ungebundenem und locker gebundenem Wasser in Lebensmitteln oder Speisen und Zubereitungen. Der aw-Wert ist damit eine wichtige Größe für die Haltbarkeit von Lebensmitteln. Je größer der aw-Wert ist, also je mehr ungebundenes Wasser ein Lebensmittel enthält, desto leichter kann es verderben, da das frei verfügbare Wasser vor allem für das Wachstum bzw. den Stoffwechsel von Mikroorganismen von entscheidender Bedeutung ist. In einer Ausführungsform können die fünften veganen Nahrungsmittelerzeugnisse 9 in der Reifekammer oder in einer Räucherkammer auch Rauch ausgesetzt werden.

Sind die fünften veganen Nahrungsmittelerzeugnisse 9 gereift, werden sie in gleichgrosse Zylinder geschnitten, siehe **Figur 4****.** Diese Zuschnitte werden im Folgenden sechste vegane Nahrungsmittelerzeugnisse 14 genannt. Die Grösse des Gitterblechs 7 und die Schnittlänge der vierten veganen Nahrungsmittelerzeugnisse 8 werden insbesondere derart gewählt, dass beim Zuschnitt der fünften veganen Nahrungsmittelerzeugnisse 9 zu sechsten veganen Nahrungsmittelerzeugnissen 14 möglichst wenige unverwertbare Reste entstehen. Hierbei wird auch die durch Wasserentzug bewirkte Schrumpfung beim Reifeprozess berücksichtigt. Die Zylinder der sechsten veganen Nahrungsmittelerzeugnisse 14 haben etwa einen Durchmesser im Bereich zwischen 0,6 cm bis 1,4 cm, insbesondere 0,9 cm bis 1,1 cm, insbesondere 1,0 cm. Die Länge beträgt etwa 8 cm bis 20 cm, insbesondere etwa 13 cm bis 15 cm. Das Gewicht beträgt etwa 35 bis 50 Gramm, insbesondere 43 bis 45 Gramm, insbesondere 43 Gramm.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

## Patentansprüche

1. Ein Verfahren zur Herstellung eines veganen Nahrungsmittels, welches Verfahren die folgenden Schritte aufweist:
- Herstellen einer veganen Matrix (1) durch Vermischen von:
∘ Pflanzenöl,
∘ Stärke,
∘ Verdickungsmittel,
∘ Wasser,
∘ Pflanzenprotein,
∘ Pflanzenmehl,
∘ Salz,
∘ Emulgator,
- Einfüllen der veganen Matrix (1) in einen Einfülltrichter (2) einer Vakuumfüllmaschine (3),
- Verdichten der veganen Matrix (1) in der Vakuumfüllmaschine (3),
- Befördern der veganen Matrix (1) als erstes veganes Nahrungsmittelerzeugnis zu einem Füllstromteiler (4) unter einem Druck, der von einer Drehschieberpumpe in der Vakuumfüllmaschine (3) bereitgestellt wird,
- Aufteilen des ersten veganen Nahrungsmittelerzeugnisses in mindestens zwei Stränge eines zweiten veganen Nahrungsmittelerzeugnisses (5) im Füllstromteiler (4) und
- Ausscheiden der Stränge aus dem Füllstromteiler als dritte vegane Nahrungsmittelerzeugnisse (6), wobei die Stränge jeweils ein rundes Profil aufweisen.

2. Verfahren gemäss Anspruch 1, weiterhin aufweisend die Schritte:
- Ablegen der dritten veganen Nahrungsmittelerzeugnisse (6) auf einem Gitterblech (7), wobei das Gitterblech (7) mit einem Pflanzenöl überzogen ist,
- Herstellen vierter veganer Nahrungsmittelerzeugnisse (8) durch Portionieren der dritten veganen Nahrungsmittelerzeugnisse (6) mit einem Schneidwerkzeug auf eine Länge, die zwischen 50 und 110% der Länge des Gitterblechs (7) entspricht,
- Einlagern des die vierten veganen Nahrungsmittelerzeugnisse (8) tragenden Gitterblechs (7) in eine Kochkammer,
- Bereitstellen einer ersten Temperatur und einer ersten Feuchtigkeit in der Kochkammer.

3. Verfahren gemäss der Ansprüche 1 und 2, weiterhin aufweisend die Schritte:
- Einlagern des die vierten veganen Nahrungsmittelerzeugnisse (8) tragenden Gitterblechs (7) in eine Kühlkammer,
- Bereitstellen einer zweiten Temperatur und einer zweiten Feuchtigkeit in der Kühlkammer.

4. Verfahren gemäss der Ansprüche 1 bis 3, weiterhin aufweisend die Schritte:
- Einlagern des die vierten veganen Nahrungsmittelerzeugnisse (8) tragenden Gitterblechs (7) in eine Reifekammer,
- Bereitstellen einer dritten Temperatur und einer dritten Feuchtigkeit in der Reifekammer,
- Reifen der vierten veganen Nahrungsmittelerzeugnisse (8) zu fünften veganen Nahrungsmittelerzeugnissen (9) über eine Reifedauer hinweg, die in einem definierten zeitlichen Bereich liegt, wobei dieser zeitliche Bereich so definiert ist, dass der aw-Wert der fünften veganen Nahrungsmittelerzeugnisse (9) am Ende der Reifedauer maximal 0,92 beträgt.

5. Verfahren gemäss Anspruch 4, weiterhin aufweisend den Schritt: Herstellen sechster veganer Nahrungsmittelerzeugnisse (14) durch Portionieren der fünften veganen Nahrungsmittelerzeugnisse (9) mit einem Schneidwerkzeug auf eine Länge zwischen 8 cm und 20 cm, insbesondere 13 cm und 15 cm.

6. Verfahren gemäss Anspruch 4, wobei der aw-Wert der fünften veganen Nahrungsmittelerzeugnisse (9) am Ende der Reifedauer im Bereich von 0,82-0,9 liegt.

7. Verfahren gemäss Anspruch 4, weiterhin aufweisend den Schritt: Bereitstellen eines Räuchergases in der Reifekammer zumindest während eines Teils der Reifedauer.

8. Verfahren gemäss Anspruch 1, weiterhin aufweisend den Schritt: Herstellen der veganen Matrix (1) durch Vermischen einer ersten veganen Teilmatrix, einer zweiten veganen Teilmatrix und einer dritten veganen Teilmatrix.

9. Verfahren gemäss Anspruch 8, wobei die vegane Matrix (1) durch Vermischen der ersten, zweiten und dritten veganen Teilmatrix mittels eines Kutters erfolgt und die vegane Matrix (1) die Konsistenz eines Bräts aufweist.

10. Verfahren gemäss Anspruch 8 oder 9, weiterhin aufweisend den Schritt: Herstellen der ersten veganen Teilmatrix durch Vermischen, insbesondere mittels eines Kutters, von:
∘ Pflanzenöl,
∘ Stärke,
∘ Verdickungsmittel,
∘ Wasser, insbesondere wobei das Wasser zumindest teilweise in Form von Eis vorliegt.

11. Verfahren gemäss einem der Ansprüche 8 bis 10, weiterhin aufweisend den Schritt: Herstellen der zweiten veganen Teilmatrix durch Vermischen von:
∘ Pflanzenprotein,
∘ Pflanzenmehl,
∘ Stärke,
∘ Salz,
o Wasser.

12. Verfahren gemäss Anspruch 11, wobei das Salz der Mischung der zweiten veganen Teilmatrix ein Phosphatsalz ist.

13. Verfahren gemäss einem der Ansprüche 8 bis 12, weiterhin aufweisend den Schritt: Herstellen der dritten veganen Teilmatrix durch Vermischen von:
∘ Wasser, insbesondere wobei das Wasser zumindest teilweise in Form von Eis vorliegt,
∘ Pflanzenprotein,
∘ Stärke,
∘ Verdickungsmittel,
∘ Salz,
∘ Pflanzenöl,
∘ Emulgator.

14. Verfahren gemäss Anspruch 13, wobei das Herstellen durch Vermischen mittels eines Kutters erfolgt und die dritte vegane Teilmatrix als Emulsion hergestellt wird.

15. Verfahren gemäss Anspruch 1, weiterhin aufweisend den Schritt: Gewichtsbezogenes Vergleichmässigen des ersten veganen Nahrungsmittelerzeugnisses im Füllstromteiler (4), wobei das Vergleichmässigen basierend auf einer Verwendung einer Paddel-Mischwelle und/oder einer Spiral-Mischwelle und/oder zumindest einer integrierten Wiegezelle erfolgt.
